# EUROPEAN PATENT SPECIFICATION

(11) **EP 3 132 240 B1**
(45) Date of publication and mention of the grant of the patent: **20.06.2018**
(21) Application number: 15714842.0
(22) Date of filing: 13.04.2015
(51) Int. Cl.: G01L 7/16, G01L 19/12, H01H 35/34, H01H 35/26

(54) **DEVICE FOR SIGNALLING THE PRESENCE OF PRESSURE INSIDE A PLANT, DUCT OR SPACE IN GENERAL**
VORRICHTUNG ZUR SIGNALISIERUNG DER ANWESENHEIT VON DRUCK IN EINER ANLAGE, IN EINER LEITUNG ODER EINEM RAUM IM ALLGEMEINEN
DISPOSITIF DE SIGNALISATION DE PRÉSENCE DE PRESSION À L'INTÉRIEUR D'UNE INSTALLATION, D'UNE CONDUITE OU D'UN ESPACE EN GÉNÉRAL

(30) Priority: 14.04.2014 IT MI20140693
(43) Date of publication of application: 22.02.2017
(73) Proprietor: Ma-Ter S.r.l., 20060 Pessano Con Bornago, (MI) (IT)
(72) Inventor: OMATI, Marco Gerolamo, I-20060 Pessano Con Bornago (MI) (IT); OMATI, Ennio, I-20060 Pessano Con Bornago (MI) (IT)
(74) Representative: Mittler, Enrico
(86) International application number: PCT/EP2015/057923
(87) International publication number: WO 2015/158640

(56) References cited:
- EP-A1- 0 636 384
- EP-A2- 0 542 695
- US-A- 4 831 957

## Description

The present invention relates to a device for signalling the presence of pressure inside a plant, duct or space in general.

The easiest but not always the most cost-effective and practical method to indicate the presence of pressure is to apply an analog gauge which, however, must have a dedicated connection or a digital pressure indicator which is not however capable of performing its function without electricity.

There are other devices for indicating the presence of pressure but they are usually impractical, cumbersome, sometimes even complicated from the constructional point of view and not very cost-effective.

EP 0 636 384 discloses a pressure signalling device according to the preamble of claim 1. Further prior art is disclosed in US 4 831 957.

It is the object of the present invention to provide the user/installer with a device for signalling the presence of pressure inside any space, duct, plant, etc. which is simple, practical, easy to be installed, and especially capable of providing pressure signals which are well identifiable and measurable.

Such an object is achieved with the device defined in claim 1, which also works without electricity and can also be an integral part of an electromechanical pressure switch or pressure sensor, for example. This is simply because the part indicating the presence of pressure can be incorporated within the pressure socket.

Moreover, the device is characterized in that it always indicates the presence of pressure with reference to the value at which the device has been previously adjusted/calibrated, and it suffers no damage also in case of overpressure.

Furthermore, its constructional simplicity makes it suitable for use in productions with high scale volumes and, no less important feature, the same constructional simplicity makes it reliable and constant over time.

The fact that it can be integrated into any hydraulic connection makes it highly cost-effective since two products are installed with one operation and no special connection needs to be provided for its connection.

For a better understanding, an example of the device according to the present invention is shown in the accompanying drawings, in which:
figure 1 shows an axial section of the device for signalling the presence of pressure in rest position (pressure of 0 bar);
figure 2 shows an axial section of the device for signalling the presence of pressure in working position (pressure higher than the calibration value);
figure 3 shows a cross-section of the anti-rotation coupling system of the device according to line III-III in figure 1.

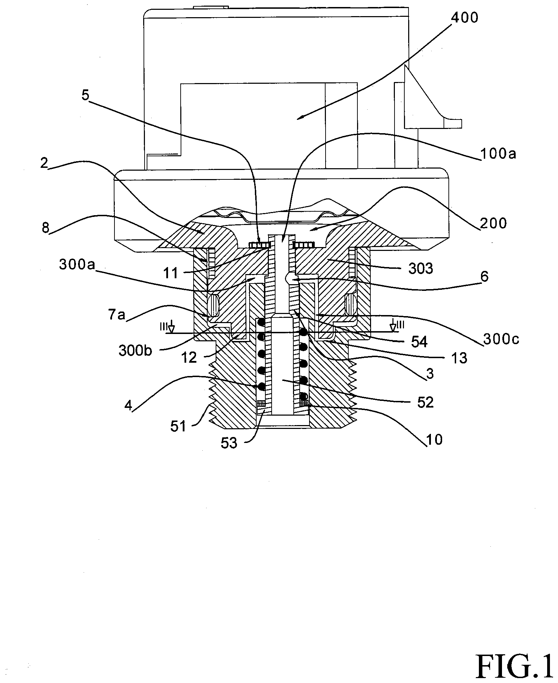

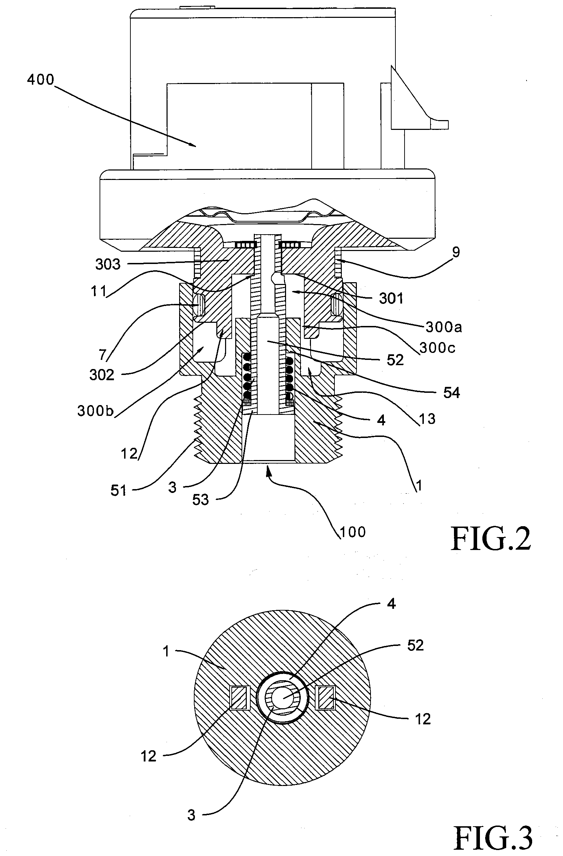

The exemplary device shown in the drawings mainly consists of three parts:
- a first hydraulic connection part (1), hereafter referred to as "lower part" with reference to figures 1 and 2
- a second part (2), hereafter referred to as "upper part", intended to support a measuring device
- a central pierced pin (3) axially inserted into parts (1) and (2).

The lower part (1), provided with an outer thread (51), is used to connect the pressure signalling device to the plant or duct under control and may be manufactured in any shape required by the application, provided that it allows the central pin (3) and a helical spring (4), interposed between the shoulders (53) and (54) of pin (3) and of the lower part (1), to be accommodated therein along its axis.

The upper part (2) is manufactured so as to be axially sliding in the lower part (1) and at the top has any suitable shape to be coupled to a measuring device (400), such as for example a pressure switch or a pressure sensor.

The three main parts, lower part (1) for the hydraulic connection, upper part (2) and central pin (3), are kept connected to one another by means of an elastic ring (5) placed in a dedicated seat at the upper end of the central pin (3). In order to make the coupling between the upper part (2) and the central pin (3) stable, a dedicated seat (11) is obtained on the central pin (3) to serve as a shoulder against a neck (303) of the upper part (2). This coupling prevents the central pin (3) from sliding upwards within a chamber (200) of the upper part (2), thus damaging the measuring device (400) applied thereon.

The pressure of the fluid present inside the plant or duct under control, through an inlet bore (100), reaches and runs along its entire length an axial bore (52) of the central pin (3) up to an outlet bore (100a) of the central pin (3) to finally reach the chamber (200) obtained within the upper part (2). Thereby, for example, a pressure sensor (400) constructed above the upper part (2) directly receives the pressure and is free to independently perform its function.

When the inner passageway of the central pin (3) reaches the pressure value present inside the plant or duct under control, one or more lateral bores (6) on the central pin (3) allow the pressure to reach an upper chamber (300a) and then, through an annular cavity (300c), an enlarged lower chamber (300b) obtained between the inner part of the lower part (1) and the inner part of the upper part (2).

The main function of chamber (300b) is to increase the section on which the pressure acts to raise the upper part (2) and the measuring device (400) applied thereon.

Since the formula for obtaining the Force having a Pressure and a Surface is: F = PxS, having a small section on which the pressure presses, the detection and accuracy of operation at low pressures would be problematic. The increase in surface obtained by means of chamber (300b) allows this problem to be overcome because the total pressure surface is the sum of the surfaces (301, 302) of the chambers (300a, 300b) communicating with each other through the cavity (300c).

This increase in surface, and as a result in the force acting on the device, allows the parts not to be manufactured with high accuracy because any friction or rubbing due to the sliding parts has a proportionally much lower value than the force generated by the pressure.

Also in the rest position (fig. 1), both the upper chamber (300a) and the lower chamber (300b) with their surfaces (301, 302) are always in communication with each other and any pressure variation occurring in the plant or duct to which the device is connected, by means of the bore (6) of the central pin (3), acts immediately.

The hydraulic sealing between the lower part (1) and the upper part (2) is ensured by an O-ring (7) applied in a dedicated seat (7a) directly obtained in the upper part (2).

Moreover, in order to give a visual signal of the presence of pressure, in a dedicated seat (8) directly obtained in the upper part (2) there is a coloured ring (9) made of heat-shrinkable material or any other elastic material which allows the ring itself to always remain clamped. As the pressure and thus the force acting on the surfaces (3001, 302) increase, the upper part (2) exits from the housing obtained in the lower part (1) thus also lifting the measuring device (400) placed thereon, which is a pressure sensor (400) in this example.

In order to prevent the upper part (2) from exiting from the lower part (1) with a consequent fluid leak, a spring (4) of appropriate size and strength is provided which, when reaching a fully locked position without compressed air between the turns (fig. 2), limits this movement, thus ensuring the sealing even in case of overpressure. Spring (4) further ensures the return of the upper part (2) to the rest position when the pressure decreases.

By changing the features of spring (4), the pressures at which the signalling device must carry out its maximum displacement may be determined, thus fully displaying the coloured ring (9). The application of a graduated scale into the seat (8) obtained in the upper part (2), suitably manufactured, would also give an indication of the pressure.

In addition, in order to more finely calibrate spring (4), one or more rings (10) can be applied on the central pin (3) above or below the spring (4) itself.

On the upper part (2) there are also two or more projections (12) sliding inside two or more recesses (13) obtained in the lower part (1) (fig. 3). This movable coupling allows the device to be easily screwed on the plant or duct under control without the aid of tools, because by rotating the upper part (2), the lower part (1) is in turn pulled. Moreover, the projections (12) and recesses (13) are obtained so that, both in the presence of pressure and with pressure at 0 bar, they are always one inside the other, thus preventing the rotation of the upper part when the device is signalling the pressure.

If the projections (12) and recesses (13) were not always coupled, the upper part (2) would be rotated, thus making the pins (12) to be no longer in correspondence of guide (13), thus affecting the return of the upper part (2) to the position of no pressure and generating a visual signal which would not correspond to reality.

## Claims

1. Device for signalling the presence of pressure inside a plant, duct or similar space, comprising a flower first part (1) provided with means (51) for hydraulic connection to the plant, duct or space under control, an upper second part (2) axially slidable inside said lower first part (1) and a central pin (3) fixed inside said upper second part (2) and run along by an axial bore (52) for hydraulic communication of the plant, duct or space under control with a chamber (200) of said upper second part (2), **characterized by** at least one transversal bore (6) of said central pin (3) provided for communication of said axial bore (52) of the pin (3) with an upper first chamber (300a) of said second part (2) above said first part (1), a wider lower second chamber (300b) formed between said lower first part (1) and said upper second part (2) and an annular cavity (300c) configured for communication of said upper first chamber (300a) with said lower second chamber (300b).

2. Signalling device according to claim 1, **characterized by** comprising a spring (4) arranged between said central pin (3) and said lower first part (1) configured to urge said upper second part (2) to rest position at zero pressure.

3. Signalling device according to claim 1, **characterized in that** said spring (4) is an helical spring arranged between an abutment (53) of said pin (3) and an abutment (54) of said lower first part (1).

4. Signalling device according to claim 1, 2 or 3, **characterized by** comprising a coloured ring (9) arranged around said upper second part (2) configured to allow visible signalling of the presence of pressure.

5. Signalling device according to claim 1, 2 or 3, **characterized by** comprising a graduate scale (8) arranged around said upper second part (2) configured to allow visible signalling of the pressure value.

6. Signalling device according to any preceding claim, **characterized by** comprising complementary projections (12) and recesses (13) in the two parts (1, 2) configured to prevent said parts (1, 2) from rotating with respect to each other.

7. Signalling device according to any preceding claim, **characterized by** comprising a seat (11) formed in the central pin (3) to be an abutment against a neck (303) of the upper second part (2) configured to make stable the coupling between the upper second part (2) and the central pin (3) and to avoid that the central pin (3) may slide inside the chamber (200) of the upper second part (2) thus damaging a measuring device (400) applied thereon.

## Patentansprüche

1. Vorrichtung zum Signalisieren des Vorhandenseins von Druck im Inneren einer Anlage, eines Kanals oder eines ähnlichen Raums, aufweisend einen unteren ersten Teil (1), der mit einer Einrichtung (51) zur hydraulischen Verbindung mit der Anlage, dem Kanal oder dem Raum unter Kontrolle versehen ist,
einen oberen zweiten Teil (2), der innerhalb des unteren ersten Teils (1) axial verschiebbar ist, sowie
einen zentralen Stift (3), der innerhalb des oberen zweiten Teils (2) festgelegt ist und entlang dessen sich eine axiale Bohrung (52) zur hydraulischen Verbindung der Anlage, des Kanals oder des Raumes unter Kontrolle mit einer Kammer (200) des oberen zweiten Teils (2) erstreckt,
**gekennzeichnet durch**
mindestens eine Querbohrung (6) des zentralen Stifts (3) zur Verbindung der axialen Bohrung (52) des Stifts (3) mit einer oberen ersten Kammer (300a) des zweiten Teils (2) oberhalb des ersten Teils (1),
eine breitere untere zweite Kammer (300b), die zwischen dem unteren ersten Teil (1) und dem oberen zweiten Teil (2) gebildet ist, sowie einen ringförmigen Hohlraum (300c), der zur Verbindung der oberen ersten Kammer (300a) mit der unteren zweiten Kammer (300b) ausgebildet ist.

2. Signalisiervorrichtung nach Anspruch 1,
**dadurch gekennzeichnet, dass** sie eine Feder (4) aufweist, die zwischen dem zentralen Stift (3) und dem unteren ersten Teil (1) angeordnet ist und dazu ausgebildet ist, den oberen zweiten Teil (2) bei Null-Druck in eine Ruheposition zu drücken.

3. Signalisiervorrichtung nach Anspruch 1,
**dadurch gekennzeichnet, dass** die Feder (4) eine Schraubenfeder ist, die zwischen einem Anschlag (53) des Stifts (3) und einem Anschlag (54) des unteren ersten Teils (1) angeordnet ist.

4. Signalisiervorrichtung nach Anspruch 1, 2 oder 3,
**dadurch gekennzeichnet, dass** sie einen farbigen Ring (9) aufweist, der um den oberen zweiten Teil (2) herum angeordnet ist und dazu ausgebildet ist, eine sichtbare Anzeige des Vorhandenseins von Druck zu ermöglichen.

5. Signalisiervorrichtung nach Anspruch 1, 2 oder 3,
**dadurch gekennzeichnet, dass** sie eine Skala (8) aufweist, die um den oberen zweiten Teil (2) herum angeordnet ist und dazu ausgebildet ist, eine sichtbare Anzeige des Druckwertes zu ermöglichen.

6. Signalisiervorrichtung nach einem der vorhergehenden Ansprüche,
**dadurch gekennzeichnet, dass** sie komplementäre Vorsprünge (12) und Aussparungen (13) in den beiden Teilen (1, 2) aufweist, die dazu ausgebildet sind, eine Drehung der Teile (1, 2) relativ zueinander zu verhindern.

7. Signalisiervorrichtung nach einem der vorhergehenden Ansprüche,
**dadurch gekennzeichnet, dass** sie einen Sitz (11) aufweist, der in dem zentralen Stift (3) zur Anlage an einem Hals (303) des oberen zweiten Teils (2) gebildet ist und dazu ausgebildet ist, die Verbindung zwischen dem oberen zweiten Teil (2) und dem zentralen Stift (3) stabil zu machen und zu vermeiden, dass sich der zentrale Stift (3) innerhalb der Kammer (200) des oberen zweiten Teils (2) verschieben kann und dadurch eine daran angebrachte Messvorrichtung (400) beschädigt werden kann.

## Revendications

1. Dispositif pour signaler la présence de pression à l'intérieur d'une installation, d'un conduit ou d'un espace similaire, comprenant une première partie inférieure (1) dotée de moyens (51) pour la connexion hydraulique à l'installation, au conduit ou à l'espace sous contrôle, une seconde partie supérieure (2) apte à coulisser axialement à l'intérieur de ladite première partie inférieure (1) et une tige centrale (3) fixée à l'intérieur de ladite seconde partie supérieure (2) et guidée par un alésage axial (52) pour la communication hydraulique de l'installation, du conduit ou de l'espace sous contrôle avec une chambre (200) de ladite seconde partie supérieure (2), **caractérisé par** au moins un alésage transversal (6) de ladite tige centrale (3) prévu pour la communication dudit alésage axial (52) de la tige (3) avec une première chambre supérieure (300a) de ladite seconde partie (2) au-dessus de ladite première partie (1), une seconde chambre inférieure plus large (300b) formée entre ladite première partie inférieure (1) et ladite seconde partie supérieure (2) et une cavité annulaire (300c) configurée pour communication de ladite première chambre supérieure (300a) avec ladite seconde chambre inférieure (300b).

2. Dispositif de signalement selon la revendication 1, **caractérisé en ce qu'**il comprend un ressort (4), agencé entre ladite tige centrale (3) et ladite première partie inférieure (1), configuré pour solliciter ladite seconde partie supérieure (2) dans une position de repos à une pression nulle.

3. Dispositif de signalement selon la revendication 1, **caractérisé en ce que** ledit ressort (4) est un ressort hélicoïdal agencé entre une butée (53) de ladite tige (3) et une butée (54) de ladite première partie inférieure (1).

4. Dispositif de signalement selon la revendication 1, 2 ou 3, **caractérisé en ce qu'**il comprend un anneau coloré (9) agencé autour de ladite seconde partie supérieure (2), configuré pour permettre un signalement visible de la présence de pression.

5. Dispositif de signalement selon la revendication 1, 2 ou 3, **caractérisé en ce qu'**il comprend une échelle graduée (8) agencée autour de ladite seconde partie supérieure (2), configurée pour permettre un signalement visible de la valeur de pression.

6. Dispositif de signalement selon l'une quelconque des revendications précédentes, **caractérisé en ce qu'**il comprend des saillies (12) et des évidements (13) complémentaires, dans les deux parties (1, 2), configurés pour empêcher que lesdites parties (1, 2) tournent l'une par rapport à l'autre.

7. Dispositif de signalement selon l'une quelconque des revendications précédentes, **caractérisé en ce qu'**il comprend un siège (11) formé dans la tige centrale (3) pour être une butée contre un col (303) de la seconde partie supérieure (2), configuré pour rendre stable l'accouplement entre la seconde partie supérieure (2) et la tige centrale (3) et éviter que la tige centrale (3) puisse glisser à l'intérieur de la chambre (200) de la seconde partie supérieure (2) et endommager alors un dispositif de mesure (400) appliqué dessus.
